# EUROPÄISCHE PATENTSCHRIFT

(11) **EP 1 835 039 B1**
(45) Veröffentlichungstag und Bekanntmachung des Hinweises auf die Patenterteilung: **19.11.2014**
(21) Anmeldenummer: 07003462.4
(22) Anmeldetag: 20.02.2007
(51) Int. Cl.: C21C 5/52, C21C 5/56, F27B 3/20, F27B 3/22

(54) **Schmelz-Aggregat, einthaltend einen Injektor, Blaslanze oder Brenner**
Smelting unit, comprising an injector, a lance or a burner
Dispositif de fusion, avec un injecteur, une lance ou un brûleur

(30) Priorität: 16.03.2006 DE 102006012005
(43) Veröffentlichungstag der Anmeldung: 19.09.2007
(73) Patentinhaber: SMS Siemag AG, 40237 Düsseldorf (DE)
(72) Erfinder: Meyn, Matthias, 40476 Düsseldorf (DE)
(74) Vertreter: Klüppel, Walter

(56) Entgegenhaltungen:
- EP-A1- 0 784 193
- EP-A2- 0 625 869
- DE-C1- 3 301 466
- DE-C1- 3 641 957

## Beschreibung

Die Erfindung betrifft ein Schmelz-Aggregat, insbesondere einen Injektor, eine Blaslanze oder einen Brenner, für gasförmige, teilchenförmige oder flüssige Brennstoffe, zum Erhitzen bzw. Aufschmelzen von Einsatzstoffen aus Schrott und/oder Roheisen und Zuschlagstoffen, in Schmelzöfen, wie bspw. Elektrolichtbogenöfen, mit einer Halterung für eine Winkelsteilung zur Schmelzbad-Oberfläche bzw. Schlackenschicht.

Ein solches Schmelz-Aggregat ist aus der DE 19625537 C1 bekannt. Das Schwergewicht dieser Bauweise liegt darin, dass die Sauerstofflanze so in der Nähe des Brennstoff-Sauerstoff-Brenners in der Ofenwand angeordnet ist, dass sie in eine von dem Brennstoff-Sauerstoff-Brenner in die Einsatzstoffe geschnittene Schneise in den Innenraum des Ofengefäßes einschiebbar ist.

Die EP 0 784 193 A1 offenbart einen Schmelzofen mit einem Oberofen mit einer Oberofenwand mit einer Einbuchtung.

Die EP 0 625 869 offenbart einen Plasmaschmelzofen mit verstellbaren Plasmaelektroden.

Derartige Schmelz-Aggregate sind fest in die Ofenwand eingesetzt, wobei die Ofenwand aus einzelnen Wandelementen aus Kupfer (sog. panels) bestehen können. Das Wandelement ist meistens speziell für den jeweiligen Injektor, die Blaslanze und/oder den Brenner ausgebildet . Bei Leckagen muss das gesamte Wandelement aus der Ofenwand ausgebaut werden. Der Ausbau und Wiedereinbau ist mit Stillstandszeiten von mehr als 60 Minuten verbunden.

Hinzukommt, dass der am stärksten beanspruchte Bereich des Wandelements der Raum um die Austrittsöffnungen der Medien bildet. An dieser Stelle werden aufgrund von Flammenrückschlägen, Strahlablenkungen sowie der hohen thermischen, chemischen und mechanischen Beanspruchungen die meisten Leckagen festgestellt.

Da das Eindringen großer Kühlwassermengen in das Innere des Schmelzofens gefährlich ist, muss in diesem Bereich das Ein- und Ausbauen des Wandelements mit besonders großer Vorsicht stattfinden. Hierbei entstehen durch die langen Stillstandszeiten entsprechende Produktionsausfälle und Energieverluste.

Bauarten, bei denen eine Veränderung der Austrittsrichtungen möglich ist, weisen zumeist einen Ringspalt zwischen Injektor, Blaslanze und/oder Brenner und dem jeweiligen Wandelement auf. Der Ringspalt ist unter den Betriebsbedingungen des heißen Schmelzofens nicht sicher und dauerhaft abzudichten. Hierdurch wird das Austreten von Flammen, heißen Gasen und/oder flüssiger Schlacke und Metallspritzern begünstigt und teilweise erst ermöglicht. Dieser Vorgang ist aus sicherheitstechnischer Sicht unbedingt zu vermeiden, da Personen- und/oder Anlagenschäden entstehen können.

Der Erfindung liegt die Aufgabe zugrunde, einen schnellen Wechsel des Injektors, der Blaslanze und/oder des Brenners bei Auftreten einer Leckage ohne einen vollständigen Ausbau des Wandelements zu ermöglichen.

Die gestellte Aufgabe wird erfindungsgemäß dadurch gelöst, dass in einem Oberofen in der Oberofen-Wand jeweils eine ins Ofeninnere gerichtete Einbuchtung vorgesehen ist, die mittels einer unter einem spitzen Winkel zur Schmelzbad-Oberfläche verlaufenden, wassergekühlten Grundplatte begrenzt ist, in der zur Grundplatte senkrecht oder leicht schräg verlaufend der Injektor, die Blaslanze oder der Brenner in dem spitzen Winkel zur Schmelzbad-Oberfläche veränderbar und einzeln leicht austauschbar aufgenommen ist, wobei der Injektor, die Blaslanze oder der Brenner jeweils innerhalb eines in der Grundplatte gelagerten Baugruppenträgers angeordnet ist, wobei der Baugruppenträger und der Injektor, die Blaslanze und/oder der Brenner für sich in dem spitzen Winkel einstellbar oder durch Montage eingestellt sind.

Die Vorteile sind ein unter günstigeren Umgebungsbedingungen schneller ablaufender Wechsel des Injektors, der Blaslanze und/oder des Brenners, ohne einen vollständigen Ausbau eines Wandelementes vornehmen zu müssen. Es kann mit relativ geringen Auswirkungen der Energie-Verluste und der Ofengase nach außen gearbeitet werden. Somit ist der Wechsel eines der Aggregate mit weniger Risiken verbunden. Außerdem tritt eine Zeitersparnis durch kürzere Wechselzeiten ein. Funktional und fertigungstechnisch ist besonders wertvoll, dass die Durchgangsbohrungen für Injektoren, Blaslanzen oder Brenner nicht als langgezogene Ellipsen auftreten, sondern durchgehend eine kurze Zylinderform erhalten und dadurch eine kurze, wirkungsvolle Abdichtung und eine leichte Herstellungsmöglichkeit besteht.

Der Vorteil ist weiterhin, dass ein Aus- und Wiedereinbau eines Wandelementes völlig vermieden wird. Außerdem wird die beim Wechsel des jeweiligen Aggregats entstehende Öffnungsweite zum Ofenraum erheblich reduziert.

Eine Ausgestaltung besteht darin, dass der Baugruppenträger austauschbar ist und mit unterschiedlichem Winkel für den Injektor, die Blaslanze und/oder den Brenner in Stückzahlen für den ausgesuchten Betrieb bevorratet ist. Dadurch kann der Baugruppenträger flexibel für das jeweilige Aggregat und die individuellen Anforderungen ausgelegt und angepasst werden. Ein sonst üblicher Konstruktionsaufwand wird verringert.

Nach der weiteren Erfindung ist vorgesehen, dass der Baugruppenträger aus einem Ringkörper besteht, der gasdicht in eine kreisförmige Aussparung der Grundplatte auswechselbar eingesetzt und lösbar befestigt ist, wobei der Injektor, die Blaslanze oder der Brenner unter einem jeweils vorher festgelegten Winkel zur Schmelzbad-Oberfläche befestigt ist. Dadurch wird der Ofeninnenraum nach außen gasdicht gemacht und das Arbeiten des Personals kann unter geringeren Risiken stattfinden.

Eine weitere Verbesserung besteht darin, dass jeweils ein zu dem Injektor, zu der Blaslanze oder zu dem Brenner abmessungsgleicher Blindkörper vorgesehen ist, der als Ersatz für einen eine Leckage oder einen Defekt aufweisenden Injektor, eine Blaslanze oder einen Brenner in die Durchgangsöffnung des Ringkörpers als Abdichtung eingesetzt wird. Der Vorteil ist ein über die gesamte Reparaturzeit gasdicht verschlossener Schmelzofen und dass Gasaustritt, der das Bedienungspersonal schädigen könnte, vermieden wird.

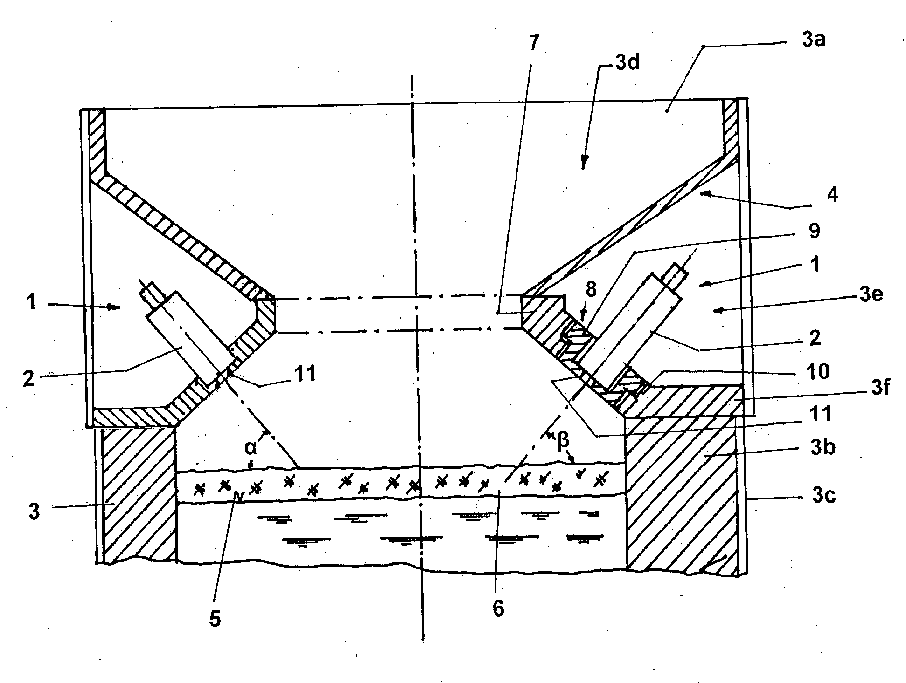

In der Zeichnung ist ein Ausführungsbeispiel der Erfindung dargestellt, wobei die einzige Figur einen senkrechten axialen Schnitt durch den oberen Teil eines Elektrolichtbogenofens zeigt.

Die Schmelz-Aggregate 1, bestehen aus einheitlich mit "2" bezeichneten Injektoren (für Sauerstoff oder Kohle), Blaslanzen für Sauerstoff und Brennern (für Gasgemische), deren Anzahl über den Umfang des Schmelzofens, im Ausführungsbeispiel eines Elektrolichtbogenofens 3, verteilt angeordnet sind. Der Elektrolichtbogenofen 3 besitzt einen Oberofen 3a und im unteren Teil eine übliche Ausmauerung 3b, die von einem Gefäßmantel 3c umgeben ist. Der Oberofen 3a wird durch eine Halterung 4, die konisch oder im Inneren erst senkrecht und dann horizontal nach außen verlaufen kann, gebildet.

Unterhalb des Oberofens 3a liegt die Schmelze 6 und die darüber schwimmende Schlackenschicht 5. Die Halterung 4 bildet mit der Oberofen-Wand eine ins Ofen-Innere 3d gerichtete Einbuchtung 3e, die anschließend durch eine unter einem spitzen Winkel α, β zur Schmelzbad-Oberfläche 5 oder zur Schlackenschicht 6 verlaufende, wassergekühlte Grundplatte 7 begrenzt ist und sich auf die Ausmauerung 3b mittels eines Horizontalrings 3f abstützt. Die Halterung 4, die Grundplatte 7 und der Horizontalring 3f sind von einem Mantel ähnlich dem Gefäßmantel 3c umgeben und bilden eine abnehmbare Baueinheit. In der Grundplatte 7 sind der Injektor, die Blaslanze oder der Brenner 2 in einem Baugruppenträger 8 angeordnet und können innerhalb des Baugruppenträgers 8 senkrecht zur Grundplatte 7 oder leicht schräg verlaufend im Winkel verändert werden und sind leicht austauschbar, indem diese Bauteile nur durch eine Durchgangsöffnung 11 in dem Baugruppenträger 8 abgedichtet eingesteckt sind. Entweder sind der Injektor, die Blaslanze oder der Brenner 2 jeweils innerhalb des Baugruppenträgers 8 im Winkel einstellbar oder der Baugruppenträger 8 kann, bspw. durch Verdrehen, auf einen veränderten Winkel α, β eingestellt werden.

Es können auch eine wirtschaftlich vertretbare Anzahl von Baugruppenträgern 8 bevorratet werden, die unterschiedliche Winkel α, β für den Injektor, die Blaslanze und den Brenner 2 ergeben.

Wie gezeichnet, besteht der Baugruppenträger 8 aus einem Ringkörper 9, der gasdicht in eine kreisförmige Aussparung 10 der Grundplatte 7 auswechselbar eingelassen und lösbar befestigt ist. Die Winkel α, β zur Schmelzbad-Oberfläche 5 können vorher festgelegt werden, so dass im Betrieb bei Änderung der Prozessvorgabe nach Erfahrungswerten ein geeigneter Baugruppenträger 8 vorhanden ist und nur ausgewechselt zu werden braucht.

In dieser Zeit des Wechsels des Baugruppenträgers 8 wird jeweils ein zum Injektor, zu der Blaslanze oder zum Brenner 2 abmessungsgleicher Blindkörper eingesetzt, der als Ersatz für einen eine Leckage oder einen Defekt aufweisenden Injektor, eine Blaslanze oder einen Brenner 2 die Durchgangsöffnung 11 des Ringkörpers 9 als Abdichtung verschließt.

### Bezugszeichenliste

- 1: Schmelz-Aggregat
- 2: Injektor, Blaslanze, Brenner
- 3: Elektrolichtbogenofen
- 3a: Oberofen
- 3b: Ausmauerung
- 3c: Gefäßmantel
- 3d: Ofen-Inneres
- 3e: Einbuchtung
- 3f: Horizontalring
- 4: Halterung
- 5: Schmelzbad-Oberfläche
- 6: Schlackenschicht
- 7: Grundplatte
- 8: Baugruppenträger
- 9: Ringkörper
- 10: Aussparung
- 11: Durchgangsöffnung

## Patentansprüche

1. Schmelz-Aggregat (1), enthaltend einer Injektor, Blaslanze oder Brenner (2), für gasförmige, teilchenförmige oder flüssige Brennstoffe, zum Erhitzen bzw. Aufschmelzen von Einsatzstoffen aus Schrott und/oder Roheisen und Zuschlagsstoffen, in Schmelzöfen wie bspw. Elektrolichtbogenöfen (3), mit einer Halterung (4) für eine Winkelstellung zur Schmelzbad-Oberfläche (5) bzw. Schlackenschicht (6), wobei in einem Oberofen (3a) in der Oberofen-Wand (3b) jeweils eine ins Ofen-Innere (3d) gerichtete Einbuchtung (3e) vorgesehen ist, die mittels einer unter einem spitzen Winkel ( α, β) zur Schmelzbad-Oberfläche (5) verlaufende, wassergekühlten Grundplatte (7) begrenzt ist, in der zur Grundplatte (7) senkrecht oder leicht schräg verlaufend der Injektor, die Blaslanze oder der Brenner (2) in dem spitzen Winkel (α, β) zur Schmelzbad-Oberfläche (5) veränderbar und einzeln leicht austauschbar aufgenommen ist,
**dadurch gekennzeichnet,**
**dass** der Injektor, die Blaslanze oder der Brenner (2) jeweils innerhalb eines in der Grundplatte (7) gelagerten Baugruppenträgers (8) angeordnet ist, wobei der Baugruppenträger (8) und der Injektor, die Blaslanze und/oder der Brenner (2) für sich in dem spitzen Winkel (α, β) einstellbar oder durch Montage eingestellt sind.

2. Schmelz-Aggregat nach Anspruch 1, **dadurch gekennzeichnet, dass** der Baugruppenträger (8) austauschbar ist und mit unterschiedlichem Winkel (α, β) für den Injektor, die Blaslanze und/oder den Brenner (2) in Stückzahlen für den ausgesuchten Betrieb bevorratet ist.

3. Schmelz-Aggregat nach den Ansprüchen 1 oder 2, **dadurch gekennzeichnet, dass** der Baugruppenträger (8) aus einem Ringkörper (9) besteht, der gasdicht in eine kreisförmige Aussparung (10) der Grundplatte (7) auswechselbar eingesetzt und lösbar befestigt ist, wobei der Injektor, die Blaslanze oder der Brenner (2) unter einem jeweils vorher festgelegten Winkel (α, β) zur Schmelzbad-Oberfläche (5) befestigt ist.

4. Schmelz-Aggregat nach einem der Ansprüche 1 bis 3, **dadurch gekennzeichnet, dass** jeweils ein zu dem Injektor, zu der Blaslanze oder zu dem Brenner (2) abmessungsgleicher Blindkörper vorgesehen ist, der als Ersatz für einen eine Leckage oder einen Defekt aufweisenden Injektor, eine Blaslanze oder einen Brenner (2) in die Durchgangsöffnung (11) des Ringkörpers (9) als Abdichtung eingesetzt wird.

## Claims

1. Smelting unit (1), comprising an injector, a blowing lance or a burner (2), for gaseous, particulate or liquid fuels, for heating or melting charge materials of scrap and/or pig iron and additives, in smelting furnaces such as, for example, electric arc furnaces (3), with a mount (4) for angular setting with respect to the melt bath surface (5) or slag layer (6), wherein provided in a top furnace (3a) in the top-furnace wall (3b) is a respective bulge (3e), which is directed into the furnace interior (3d) and which is bounded by means of a water-cooled base plate (7), which extends at an acute angle (α, β) with respect to the melt bath surface (5) and in which the injector, blowing lance or burner (2) extending perpendicularly or at a slight inclination to the base plate (7) is mounted to be variable in the acute angle (α, β) with respect to the melt bath surface (5) and to be individually easily exchangeable, **characterised in that** the injector, blowing lance or burner (2) is respectively arranged within a subassembly carrier (8) mounted in the base plate (7), wherein the subassembly carrier (8) and the injector, blowing lance and/or burner (2) is or are in itself or themselves settable or, through mounting, set at the acute angle (α, β).

2. Smelting unit according to claim 1, **characterised in that** the subassembly carrier (8) is exchangeable and stocked, with different angles (α, β) for the injector, blowing lance and/or burner (2), in piece numbers for the desired operation.

3. Smelting unit according to claim 1 or 2, **characterised in that** the subassembly carrier (8) consists of an annular body (9), which is gas-tightly and exchangeably inserted in a circular recess (10) of the base plate (7) and detachably fastened, wherein the injector, blowing lance or burner (2) is fastened at a respective predetermined angle (α, β) with respect to the melt bath surface (5).

4. Smelting unit according to any one of claims 1 to 3, **characterised in that** a respective blind body of the same dimension as the injector, blowing lance or burner (2) is provided and is used in the passage opening (11) of the annular body (9) as a seal to replace an injector, a blowing lance or a burner (2) with a leakage or a defect.

## Revendications

1. Agrégat de fusion (1) contenant un injecteur, une lance de soufflage ou un brûleur (2) destiné à des combustibles gazeux, particulaires ou liquides, pour le chauffage, respectivement la mise en fusion de matières de charge constituées par de la ferraille et/ou de la fonte brute et des substances d'addition, dans des fours de fusion, comme par exemple des fours à arc électrique (3), comprenant un dispositif de fixation (4) pour une position angulaire par rapport à la surface du bain de fusion (5), respectivement à la couche de laitier (6), dans lequel on prévoit, dans un four supérieur (3a), dans la paroi (3b) du four supérieur, respectivement un creux (3e) orienté vers l'intérieur (3d) du four, qui est délimité par une plaque de base (7) refroidie à l'eau, s'étendant en formant un angle aigu (α, β) par rapport à la surface (5) du bain de fusion, dans laquelle, en s'étendant dans une direction perpendiculaire ou légèrement inclinée par rapport à la plaque de base (7), vient se loger l'injecteur, la lance de soufflage ou le brûleur (2) de manière à pouvoir être modifié en ce qui concerne l'angle aigu (α, β) qu'il forme par rapport à la surface (5) du bain de fusion et de manière à pouvoir être individuellement échangé de façon aisée, **caractérisé en ce que** l'injecteur, la lance de soufflage ou le brûleur (2) est disposé chaque fois à l'intérieur d'un support de modules (8) monté dans la plaque de base (7), le support de modules (8) et l'injecteur, la lance de soufflage et/ou le brûleur (2) pouvant être réglés en soi ou étant réglés par le montage en ce qui concerne l'angle aigu (α, β).

2. Agrégat de fusion selon la revendication 1, **caractérisé en ce que** le support de modules (8) peut être échangé et est fourni en nombres d'exemplaires pour l'exploitation sélectionnée avec un angle différent (α, β) pour l'injecteur, la lance de soufflage et/ou le brûleur (2).

3. Agrégat de fusion selon la revendication 1 ou 2, **caractérisé en ce que** le support de modules (8) est constitué d'un corps annulaire (9) qui est inséré de façon à pouvoir être échangé et fixé de manière amovible en procurant une étanchéité aux gaz dans un évidement circulaire (10) de la plaque de base (7), dans lequel l'injecteur, la lance de soufflage ou le brûleur (2) est fixé en formant un angle (α, β) chaque fois déterminé au préalable par rapport à la surface (5) du bain de fusion.

4. Agrégat de fusion selon l'une quelconque des revendications 1 à 3, **caractérisé en ce qu'**on prévoit respectivement un corps borgne de dimensions égales à celles de l'injecteur, à celles de la lance de soufflage ou à celles du brûleur (2), qui est inséré, pour faire office de remplacement pour un injecteur présentant une fuite ou un défaut, pour une lance de soufflage ou pour un brûleur (2), dans l'ouverture de passage (11) du corps annulaire (9), à titre d'étanchéité.
